# EUROPEAN PATENT APPLICATION

(11) **EP 4 588 555 A2**
(43) Date of publication of application: **23.07.2025**
(21) Application number: 25173607.0
(22) Date of filing: 15.01.2021
(51) Int. Cl.: B01F 21/00

(54) **SYSTEM AND METHOD FOR GERMANIUM-68 ISOTOPE PRODUCTION**

(30) Priority: 17.01.2020 US 202062962525 P; 14.01.2021 US 202117148880
(62) Divisional of application: 21741745.0
(71) Applicant: BWXT Medical, Inc., Cambridge ON N1R 5V3 (CA)
(72) Inventor: Wong, Chung, Kay, Michael, Vancouver, V6T 2A3 (CA); Whyte, Raymond, Jeffrey, Vancouver, V6T 2A3 (CA)
(74) Representative: Gray, James

(57) **Abstract**

A system and method for producing Germanium-68 (Ge-68) isotopes is provided. The method includes irradiating a plated or encapsulated target containing Gallium, dissolving the irradiated target with an acid, and purifying the dissolved target by distillation to produce purified Ge-68. A dissolution cell assembly is provided for use in the dissolution step of the method.

## Description

### CROSS-REFERENCE TO RELATED APPLICATIONS

This application claims priority from U.S. Provisional Patent Application No. 62/962,525, filed on January 17, 2020 and U.S. Patent Application No. 17/148,880, filed January 14, 2021 in the United States Patent and Trademark Office. The disclosure of which is incorporated herein by reference in its entirety.

### FIELD OF THE INVENTION

The present invention relates to a system and a method for production of a Germanium-68 (Ge-68) isotope.

### BACKGROUND OF THE INVENTION

There are existing methods for Ge-68 production that typically involve either extraction or chromatography. Solvent extraction is a method to separate compounds based on their relative solubility in two different immiscible liquids, such as a non-polar solvent and polar solvent. Examples of non-polar solvents are organic solvents such as carbon tetrachloride and hexane.

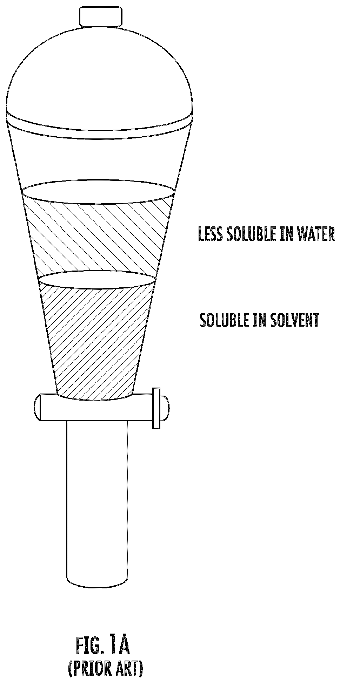

The solvent extraction method requires the use of carbon tetrachloride. The Food and Drug Administration (FDA) classifies carbon tetrachloride as a toxic and carcinogenic solvent, and the FDA suggests that class 1 solvents be avoided. See Fig. 1A of a prior art extraction method. Examples of polar solvents are water and ethanol. Among the disadvantages of extraction are a trace amount of class 1 toxic solvent may present in product, extraction is a manual labor intensive procedure, and dissolved target wastes and toxic solvent waste are produced.

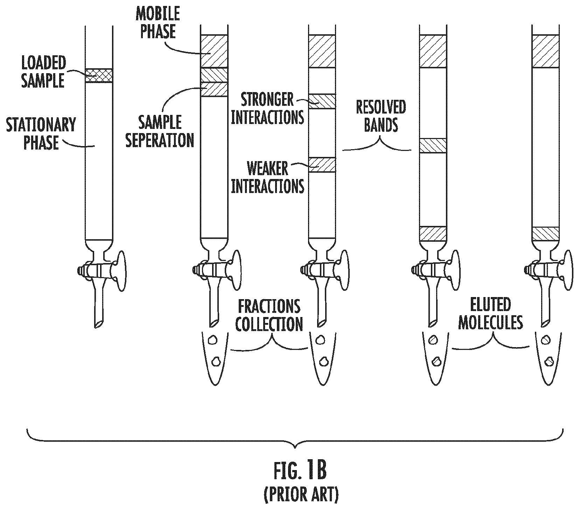

Another method used for Ge-68 production is column chromatography which is a method that separates substances based on differential adsorption of compounds to an adsorbent. Each compound moves at a different rate through a column. See Fig. 1B of a prior art chromatography method. Among the disadvantages of chromatography are trace amounts of starting materials and target materials such as cobalt (Co), gallium (Ga), nickel (Ni), and zinc (including but not limited to Zn-65) may be present in product, column chromatography is a manual labor intensive procedure, and dissolved target wastes and solvent waste are produced.

Thus, there is a need for a system and method for the production of Ge-68 isotopes, particularly medical grade Ge-68 isotopes, that overcomes the disadvantages of these known methods.

### SUMMARY OF THE INVENTION

The present invention relates to a method for producing Germanium-68 (Ge-68) isotopes, preferably Ge-68 medical grade isotopes.

In an embodiment of the invention, a method for producing Ge-68 isotopes is provided. The method comprises irradiating a solid target plated with a Ga-Ni alloy to form an irradiated Ga-Ni alloy plated target, dissolving the irradiated Ga-Ni alloy plated solid target with an acid, and purifying the dissolved irradiated plated target by distillation to produce purified Ge-68.

In an embodiment of the invention, a method for producing Ge-68 isotopes is provided. The method comprises irradiating Gallium metal encapsulated in a metal or a metal alloy to form an irradiated encapsulated target, heating the irradiated target to melt the Ga metal, puncturing the heated target, dissolving the punctured target with an acid, and purifying the dissolved target by distillation to produce purified Ge-68.

In an embodiment of the invention, a system for practicing the method(s) is provided. The system comprises a dissolution cell assembly. The dissolution cell assembly comprises a dissolution tank or tank assembly, and a heater or heater assembly.

Further areas of applicability of the present invention will become apparent from the detailed description provided hereinafter. It should be understood that the detailed description and specific examples, while indicating the preferred embodiments of the invention, are intended for purposes of illustration only and are not intended to limit the scope of the invention.

### CLAUSES

Clause 1. A method for producing Germanium-68 isotopes, the method comprising:
irradiating a solid target plated with a Ga-Ni alloy to form an irradiated Ga-Ni alloy plated target,
dissolving the irradiated Ga-Ni alloy plated solid target with an acid, and
purifying the dissolved irradiated plated target by distillation to produce purified Germanium-68.

Clause 2. The method according to clause 1, wherein the solid target comprises silver.

Clause 3. The method according to clause 1, wherein the solid target is plated with an insulation layer.

Clause 4. The method according to clause 3, wherein the insulation layer is selected from the group consisting of copper, aluminum, nickel, tungsten, silver-copper alloy, tungsten-silver alloy, rhodium, rhodium-gallium alloy, niobium, and a combination thereof.

Clause 5. The method according to clause 1, wherein the acid is Hydrochloric acid (HCl), sulfuric acid, nitric acid, or a combination of other strong acids.

Clause 6. The method according to clause 1, wherein dissolving occurs at a temperature in a range of 70 degrees C to 80 degrees C.

Clause 7. The method according to clause 1, further comprising condensing vapor produced during dissolution.

Clause 8. The method according to clause 1, further comprising increasing the temperature after dissolution.

Clause 9. The method according to clause 8, wherein the temperature is increased to 90 degrees C to 100 degrees C.

Clause 10. The method according to clause 7, wherein the vapor is condensed at a distillation condenser.

Clause 11. The method according to clause 1, further comprising collecting purified Ge-68.

Clause 12. The method according to clause 11, wherein the purified Ge-68 is medical grade.

Clause 13. A method for producing Ge-68 isotopes, the method comprising:
irradiating Gallium metal encapsulated in a metal or a metal alloy to form an irradiated encapsulated target,
heating the irradiated target to melt the Ga metal,
puncturing the heated target,
dissolving the punctured target with an acid,
purifying the dissolved target by distillation to produce purified Ge-68.

Clause 14. The method according to clause 13, wherein the metal alloy is a Niobium-Zirconium alloy.

Clause 15. The method according to clause 14, wherein the Niobium-Zirconium alloy contains up to 50 weight percent zirconium.

Clause 16. The method according to clause 13, wherein dissolving occurs in a dissolution cell assembly.

Clause 17. A dissolution cell assembly comprising:
a dissolution tank or tank assembly, and
a heater or heater assembly.

Clause 18. The dissolution cell assembly according to clause 17, wherein the heater or heater assembly comprises a dissolution cell base heater assembly and a dissolution cell heater plug assembly.

Clause 19. The dissolution cell assembly according to clause 18, further comprising a pipette tip.

Clause 20. The dissolution cell assembly according to clause 19, wherein a vapor color indicator is present in the pipette tip.

Clause 21. The dissolution cell assembly according to clause 17, wherein the dissolution cell assembly is combined with a distillation condenser.

### BRIEF DESCRIPTION OF THE DRAWINGS

The present invention will become more fully understood from the detailed description and the accompanying drawings, which are not necessarily to scale, wherein:
Fig. 1A is a prior art extraction method.
Fig. 1B is a prior art chromatography method.
Fig. 2 is a system diagram in accordance with the present invention.
Fig. 3 is another system diagram in accordance with the present invention.
Fig. 4A is a perspective view of the dissolution cell assembly of Fig. 2.
Fig. 4B is an exploded view of the dissolution cell assembly of Fig. 4A.
Fig. 4C is another view of a dissolution cell assembly of the present invention.

### DESCRIPTION OF THE PREFERRED EMBODIMENTS

The following description of the embodiments of the present invention is merely exemplary in nature and is in no way intended to limit the invention, its application, or uses. The following description is provided herein solely by way of example for purposes of providing an enabling disclosure of the invention, but does not limit the scope or substance of the invention.

In an embodiment of the invention, a method is provided for producing Germanium-68 (Ge-68) isotopes, preferably Ge-68 medical grade isotopes.

In an embodiment of the invention, the method generally comprises providing a plated target, irradiating the plated target, dissolving the irradiated target, and purifying the dissolved target by distillation to obtain Ge-68 isotopes.

Target plating: A solid metal is used as a base or base layer and is plated with a Ga-Ni alloy thereby forming a plated target. Alternatively, the plated target comprises a base or base layer, an optional insulation layer, and Ga-Ni alloy layer. Preferably, the base or base layer comprises silver (Ag). However, other metals or metal alloys for the base layer include, but are not limited to, copper (Cu), aluminum (Al), nickel (Ni), tungsten (W), Ag-Cu alloy, W-Ag alloy, rhodium (Rh), Rh-Ga alloy, niobium (Nb), other thermal conductive metals or metal alloys, or a combination thereof. Metals or metal alloys for the insulation layer include, but are not limited to, silver (Ag), copper (Cu), aluminum (Al), nickel (Ni), tungsten (W), Ag-Cu alloy, W-Ag alloy, rhodium (Rh), Rh-Ga alloy, niobium (Nb), other thermal conductive metals or metal alloys, or a combination thereof.

Irradiation of Plated Target: The plated target is sent to a cyclotron and irradiated forming an irradiated Ga-Ni alloy plated Ag solid target.

Plated Target dissolution: The irradiated Ga-Ni alloy plated silver solid target is placed in a dissolution cell assembly. Hydrochloric acid (HCl) is used to dissolve the Ga-Ni alloy at approximately 70 degrees C to 80 degrees C for approximately 6 to 24 hours. Vapors produced during dissolution are condensed at a condenser and returned to the dissolution cell assembly.

Product distillation purification: After dissolution is complete, a valve setting is changed and the temperature is increased to approximately 90 degrees C to 100 degrees C. As germanium tetrachloride is the only volatile compound at approximately 95 degrees C, vapor is condensed at a distillation condenser and the purified Ge-68 product is collected at a receiver. Purification occurs in approximately 20 to 60 minutes.

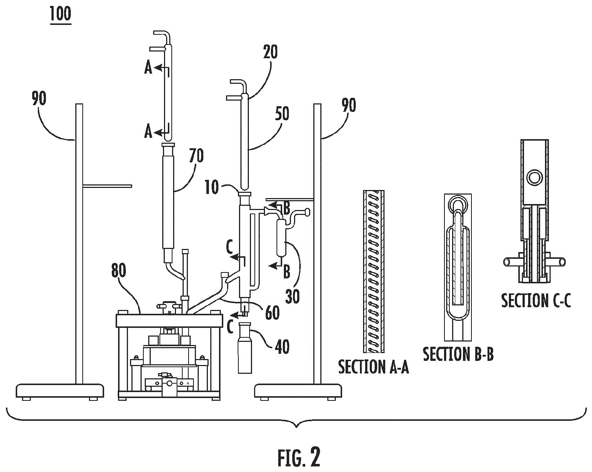

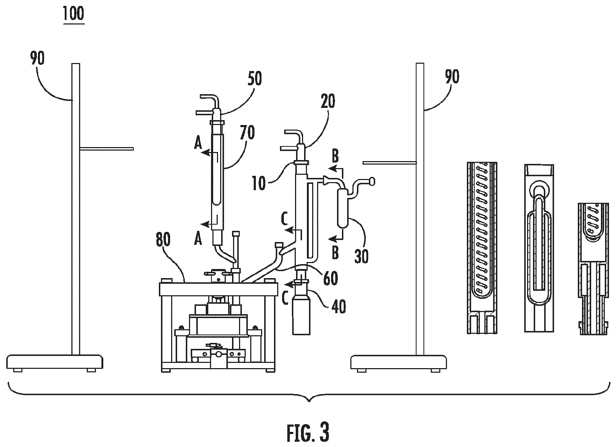

In an embodiment of the invention, a system is provided. Referring to Figs. 2 and 3, the system comprises: a main body 10, a distillation condenser 20, a collector assembly 30, a receiver 40, a reflux condenser (no valve) 50, a glass tube 60, a condenser holder 70, a dissolution cell assembly 80, and a base support stand(s) (preferably porcelain) 90. As shown in Fig. 3, for example, the system has two condensers and the receiver connected to the main body. Both condensers can be separated from the condenser holder.

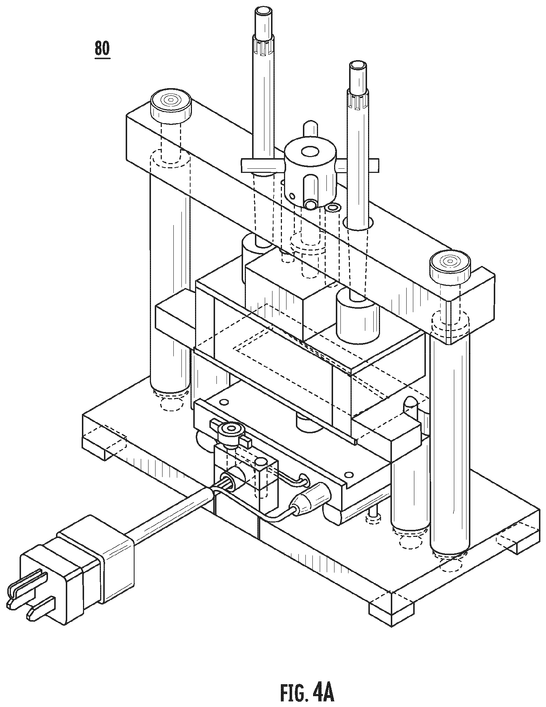

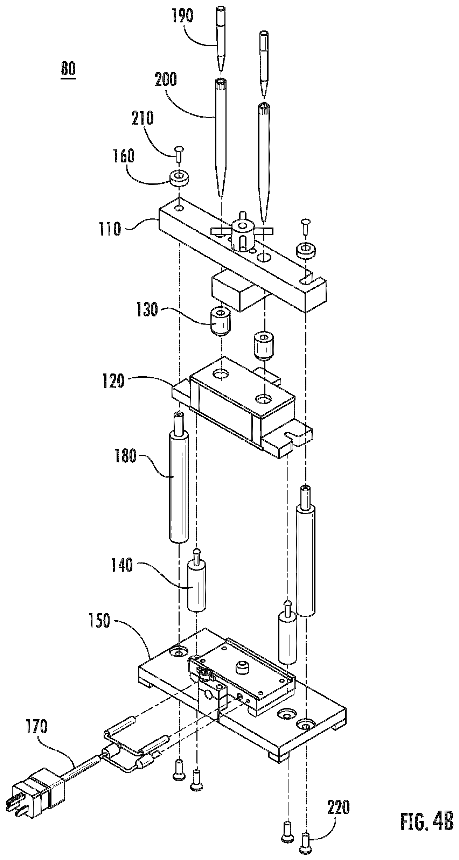

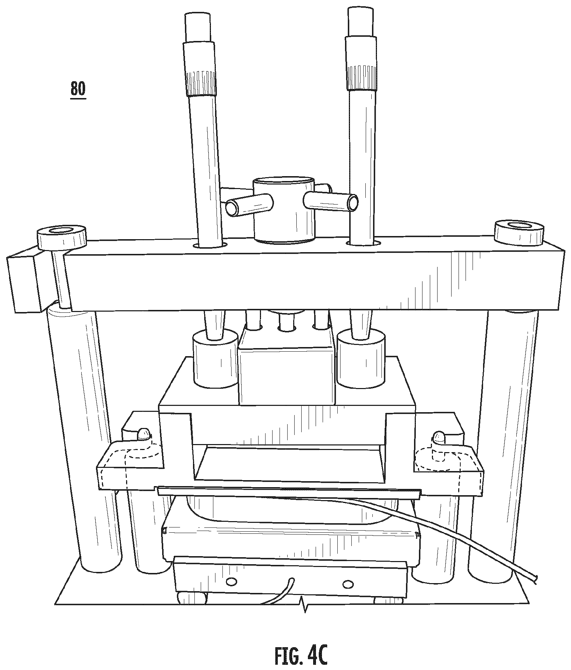

Fig. 4A is a perspective view of dissolution cell assembly of Fig. 2. Fig. 4B is an exploded view of dissolution cell assembly of Fig. 4A. Fig. 4C is a photograph of a dissolution cell assembly of the present invention.

The dissolution cell assembly 80 generally comprises a dissolution tank or tank assembly, and a heater or heater assembly. The heater or heater assembly typically comprises a dissolution cell base heater assembly and a dissolution cell heater plug assembly.

As shown in the figures, the dissolution cell assembly 80 comprises: a dissolution cell cross bar sub-assembly 110, a dissolution tank assembly 120, pipette adapter(s) 130, locating pin(s) 140, dissolution cell base heater assembly 150, cap(s) 160, dissolution cell heater plug assembly 170, column(s) 180, pipette tip(s) 190, 200, and stainless steel (SS) hex socket c/sunk flat head screws 210, 220. Pipette tips 190, 200 are inserted through holes bored into the dissolution cell cross bar sub-assembly 110 and into pipette adapters 130 which are screwed into the dissolution tank assembly 120. The holes the dissolution cell cross bar sub-assembly 110 are in alignment with the holes of the dissolution tank assembly 120. Two locating pins 140 are inserted into two holes in the dissolution cell base heater assembly 150. Two columns 180 are also inserted into two holes in the dissolution cell base heater assembly 150. The columns 180 connect to the dissolution tank assembly 120 by being inserted through notches in the dissolution tank assembly 120. The dissolution cell heater plug assembly 170 is connected to the dissolution cell base heater assembly 150. Screws are used to connect each of the two columns 180 and the two locating pins 140 to the dissolution cell base heater assembly 150. Screws 210 are also screwed through caps 160 and into the dissolution cell cross bar sub-assembly 110.

The purpose of the dissolution cell assembly is to be used as the vehicle in which to dissolve the Ga-Ni alloy plated on the Ag target in 4N to 12N HCl solution. The Ga-Ni alloy plated target is setup between the dissolution cell base heater assembly 150 and dissolution tank assembly 120. Approximately 30 ml to 70 ml of 4N to 12N HCl are added to slowly dissolve the Ga-Ni alloy. Silver does not react with HCl which is advantageous. After the Ga-Ni alloy is completely dissolved, the solution is then transferred to a round bottom flask for purification process.

The dissolution tank assembly 120 is comprised of glass or plastic. A preferred plastic is acrylic. However, other plastics may be used including, but not limited to, polytetrafluoroethylene (PTFE), fluoroethylenepropylene (FEP), perfluoralkoxy (PFA), ethylenetetrafluoroethylene copolymer (ETFE), ethylene-chloro tri fluoro ethylene (E-CTFE), polyvinylidene fluoride (PVDF), polyvinyl fluoride (PVF), terephthalate (PET), polyethylene (PE), polyvinyl chloride (PVC), polypropylene (PP), or a combination thereof. Since Ge-68 tetrachloride is volatile, a vapor color indicator may optionally be added to and present in the pipette tip 190. Although the dissolution cell assembly 180 and the distillation condenser 20 for purification are shown as separate units, it is also within the scope of the present invention to combine the dissolution cell assembly 180 with the distillation condenser 120.

In an embodiment of the invention, a method is provided for producing Ge-68 isotopes comprising providing an encapsulated target, irradiating the encapsulated target, dissolving the irradiated target, and purifying the dissolved target by distillation to obtain Ge-68 isotopes.

Encapsulated target: Gallium metal is encapsulated in a metal or metal alloy thereby forming an encapsulated target. For example, 6 to 18 grams of Ga metal can be encapsulated in a Niobium-Zirconium alloy. The alloy may contain up to 50 weight percent zirconium. The encapsulated target is irradiated. Once the irradiation is complete, the irradiated target is heated to 30 to 40 degree C to melt the Ga metal. Then, the niobium alloy encapsulation is punctured and the liquid Ga is transferred into a flask such as a 50 to 250 ml round bottom flask. The method further comprises dissolving the irradiated target, preferably in the dissolution cell assembly. Approximately 10 ml to 100 ml of 4N to 12N HCl and 10 ml to 100ml of 30% H₂O₂ are added to the round bottom flask. The dissolution is complete when all Ga metal is oxidized into the chloride form. The next step is purifying the dissolved target by distillation, which is identical to the Ge-68 solid target process.

Among the advantages of the system and method of the present invention are no known impurities, the final product is the only volatile compound (except solvent which is HCl and water), simple and efficient one-step purification, and minimal amount of dissolved target wastes but no solvent waste.

### EXAMPLE

A 2-hour, 50-200uA, 29MeV proton irradiation was performed on a 0.5 to 2.0 grams of GaNi alloy which was an electroplated silver target. A quantity of 30 to 70 ml of 6N HCl was used to dissolve the GaNi alloy and form a dissolved target solution (DTS). A sample of the DTS was analyzed using gamma spectroscopy to generate the "Before Purification Activity" data set forth in Table 1. Then, the DTS was purified by distillation and 5 to 10ml of distillate was collected. A sample of the purified sample was analyzed using gamma spectroscopy to generate the "After Purification Activity" data.

**Table 1**

| **Sample #1** | | |
|---|---|---|
| | **Before Purification** | **After Purification** |
| **Nuclide (name)** | **Activity (mCi)** | **Activity (mCi)** |
| Co-56 | 0.76 | ND |
| Co-57 | 0.32 | ND |
| Co-58 | 0.18 | ND |
| Zn-65 | 1.04 | ND |
| Ga-67 | 0.72 | ND |
| Ge-68 | 2.99 | 2.92 |
| Ge-69 | 0.02 | 0.02 |

The % yield of Ge-68 was 97.7%. All non-Ge isotope was not detected (ND) after purification.

It will therefore be readily understood by those persons skilled in the art that the present invention is susceptible of broad utility and application. Many embodiments and adaptations of the present invention other than those herein described, as well as many variations, modifications and equivalent arrangements, will be apparent from or reasonably suggested by the present invention and the foregoing description thereof, without departing from the substance or scope of the present invention. Accordingly, while the present invention has been described herein in detail in relation to its preferred embodiment, it is to be understood that this disclosure is only illustrative and exemplary of the present invention and is made merely for purposes of providing a full and enabling disclosure of the invention. The foregoing disclosure is not intended or to be construed to limit the present invention or otherwise to exclude any such other embodiments, adaptations, variations, modifications and equivalent arrangements.

## Claims

1. A method for producing Ge-68 isotopes, the method comprising:
irradiating Gallium metal encapsulated in a metal or a metal alloy to form an irradiated encapsulated target,
heating the irradiated target to melt the Ga metal,
puncturing the heated target,
dissolving the punctured target with an acid,
purifying the dissolved target by distillation to produce purified Ge-68.

2. The method according to claim 1, wherein the metal alloy is a Niobium-Zirconium alloy.

3. The method according to claim 2, wherein the Niobium-Zirconium alloy contains up to 50 weight percent zirconium.

4. The method according to claim 1, wherein dissolving occurs in a dissolution cell assembly.

5. The method according to claim 1, wherein the Ga metal comprises 6 to 18 grams of Ga metal.

6. The method according to claim 1, wherein heating the irradiated target comprises heating the target to 30 to 40-degree C to melt the Ga metal.

7. The method according to claim 1, wherein acid used in dissolving the punctured target comprises 10 to 100ml of 4N to 12N HCl and 10 to 100ml of 30% H2O2.
